Europäisches Patentamt

(19) European Patent Office

Office européen des brevets

(11) Numéro de publication: **0 017 538**

**B1**

(12) **FASCICULE DE BREVET EUROPEEN**

(45) Date de publication du fascicule du brevet: **10.02.82**

(51) Int. Cl.³: **C 01 B 23/00, F 25 J 3/02**

(21) Numéro de dépôt: **80400359.8**

(22) Date de dépôt: **18.03.80**

(54) **Procédé et installation d'obtention d'argon substantiellement pur.**

(30) Priorité: **27.03.79 FR 7907585**

(43) Date de publication de la demande:
**15.10.80 Bulletin 80/21**

(45) Mention de la délivrance du brevet:
**10.02.82 Bulletin 82/6**

(84) Etats contractants désignés:
**BE DE FR IT LU**

(56) Documents cités:
**FR - A - 1 077 743**
**FR - A - 1 478 558**
**FR - A - 2 229 644**
**GB - A - 730 014**
**GB - A - 814 396**
**GB - A - 844 971**

(73) Titulaire: **L'AIR LIQUIDE, SOCIETE ANONYME POUR L'ETUDE ET L'EXPLOITATION DES PROCEDES GEORGES CLAUDE**
**75, Quai d'Orsay**
**F-75321 Paris Cedex 07 (FR)**

(72) Inventeur: **Grenier, Maurice**
**3, rue Camille Tahan**
**F-75018 Paris (FR)**

(74) Mandataire: **Bouton Neuvy, Liliane et al,**
**L'Air liquide, Société Anonyme pour L'Etude et L'Exploitation des Procédés Georges Claude 75, Quai d'Orsay**
**F-75321 Paris Cedex 07 (FR)**

Courier Press, Leamington Spa, England.

**0 017 538**

Procédé et installation d'obtention d'argon substantiallement pur.

La présente invention a pour objet un procédé et une installation d'obtention d'argon substantiallement pur à partir d'argon brut contenant, à titre d'impuretés, 1 à 3 % d'oxygène et 1 à 3 % d'azote.

C'est à partir d'une installation classique de séparation d'air qu'un mélange d'argon de cette composition est soutiré et il importe, dans un grand nombre d'applications, d'obtenir de l'argon rigoureusement pur. Pour obtenir cette pureté, on a déjà proposé dans le document FR—A—2223644, d'assurer, après compression à moyenne pression de l'argon impur ou argon brut, l'élimination complète de l'oxygène par réaction catalyique avec de l'hydrogène en excès, la sépparation de l'eau ainsi formée, et de soumettre ensuite l'argon ainsi traité comprenant une faible teneur, par exemple de l'ordre de 1 %, d'hydrogène excédentaire d'abord à une condensation partielle avec séparation des phases, renvoi dans la chaine de traitement de la fraction gazeuse riche en hydrogène, et distillation sous basse pression de la fraction liquide constituée d'argon contenant comme impureté essentiellement l'azote, rejet à l'atmosphère d'un résiduaire en tête de colonne de distillation et recouvrement d'une fraction liquide d'argon pur en cuve de colonne, la condensation partielle s'effectuant par un échange thermique entre l'argon traité sous pression moyenne et l'argon épuré substantiellement sous pression atmosphérique.

Dans cette proposition, on a renvoyé la fraction gazeuse riche en hydrogène dès sa séparation d'avec la fraction liquide, c'est-à-dire sous la moyenne pression, à la chaîne de traitement, et malgré cela, on a été contraint d'assurer ce recyclage à l'entrée du compresseur de cycle pour tenir compte des pertes de charge. Cette disposition permet une récupération substantielle de l'hydrogène, sans parvenir toutefois à recupérer la totalité de l'hydrogène excédentaire. En effet, la séparation sous pression moyenne, si elle permet d'éliminer une fraction gazeuse essentiellement riche en hydrogène (par exemple sous 5,1 bars absolus [5,1 × $10^5$ Pa] 63,4 % et moyennement riche en argon (34,3 %) et relativement pauvre et azote (2,3 %), ne permet de récupérer qu'une proportion de l'ordre de 73 % de l'hydrogène, le reste étant perdu définitivement avec le résiduaire issu de la colonne de distillation. Dans certains cas, cette perte d'hydrogène est particulièrement préjudiciable lorsque les' problèmes d'approvisionnement et hydrogène sont critiques.

La présente invention a pour objet d'obtenir de l'argon substantiellement pur avec une perte quasi-nulle d'hydrogène.

Selon l'invention, la séparation des phases intervient seulement après détente de l'argon traité, jusqu'à une pression intermédiaire entre ladite pression moyenne et la pression basse de distallation, le cas échéant égale à cette dernière. Grâce à cette disposition, la fraction gazeuse recyclée à l'entrée du compresseur, si elle est beaucoup plus importante et, si elle présente l'inconvénient d'entraîner une quantité nettement plus importante d'argon et d'azote présente l'avantage essentiel de comprendre la presque totalité de l'hydrogène. A titre d'exemple, à une pression de détent de 1,9 bars absolus (1,9 × $10^5$ Pa), la fraction gazeuse présente ici une composition relativement faible en hydrogène (15,48 %), importante en argon (79,9 %) et non négligeable en azote (4,62 %), avec récupération à près de 100 % de l'hydrogène.

Dans la procédé selon l'invention et en se référant aux exemples indiqués, le débit recyclé représente 3,8 % du débit total du compresseur, alors que, dans le procédé selon l'état antérieur de la technique, ce débit recyclé ne représentait que 0,68 % du débit total du compresseur. Malgré cet inconvénient de recyclage d'une partie importante de l'argon traité, l'économie du procédé selon l'invention peut s'avérer particulièrement utile et positive dans un grand nombre de cas où l'épargne de l'hydrogène s'avère êre le facteur le plus important.

Les caractéristiques et avantages de l'invention ressortiront d'ailleurs de la description qui suit à titre d'exemple en référence aux dessins annexés dans lesquels:

— la figure 1 est une vue schématique d'une installation selon l'invention;

— la figure 2 est une variante de réalisation.

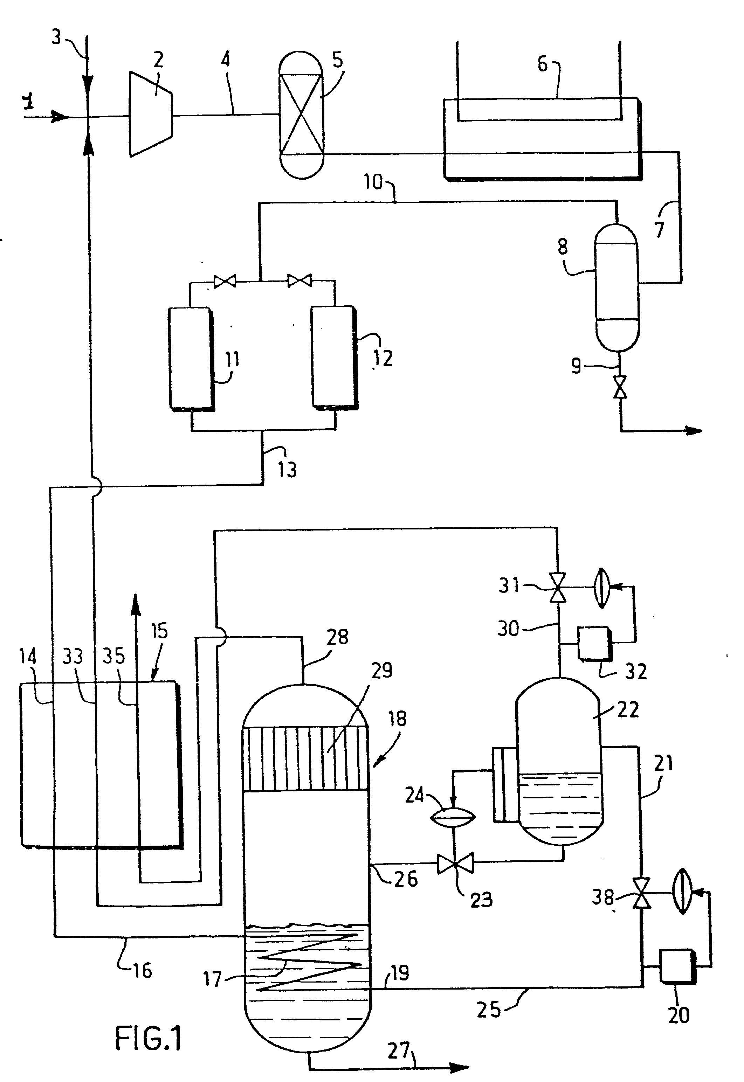

En se référant à la figure 1, un conduit d'amenée d'argon brut à traiter 1 (argon de 1 à 3 % et azote de 1 à 3 %) substantiellement à la pression atmosphérique (basse pression de la colonne de production d'argon brut non représentée) est raccordé à l'entrée d'un compresseur 2, avec apport d'hydrogène en quantitè excédentaire par un conduit 3, la sortie du compresseur étant raccordée par un canalisation 4 à un réacteur catalytique 5 assurant la réaction entre l'hydrogène et l'oxygène et de là à un ou plusieurs échangeurs thermiques 6 assurant le refroidissement à une température peu supérieure à 0°C de l'argon traité. La sortie de cet ensemble d'échange thermique 6 étant raccordée par une canalisation 7 à un séparateur d'eau 8, dans lequel la phase liquide est constituée par de l'eau soutirée par une canalisation d'évacuation 9.

L'argon traité issu en tête du séparateur 8 est amené par une canalisation 10 à deux dessicateurs 11, 12 fonctionnant en alternance et dont la sortie est raccordée par une canalisation 13 à une ligne d'échange 14 d'un échangeur 15 et de là par une canalisation 16 à un serpentin 17 placé en cuve d' tne colonne de déazotation 18; le serpentin 17 est raccordé par une canalisation 19 à une vanne de détent 38 commandée par un pressostat 20 messurant la pression en amont, la sortie de la vanne de détent 38 étant raccordée par une canalisation 21 à un séparateur de phases 22.

Le séparateur de phases 22 est raccordé, par une vanne régulatrice de débit 23 commandée par un dispositif 24 asservi au niveau "N" de la fraction liquide dans le séparateur 22, à un point milieu 26 de la colonne de déazotation 18, présentant en cuve un conduit de soutirage d'argon pur 27 et en tête une conduite d'évacuation d'un résiduaire 28.

On notera qu'en tête du séparateur 22 est agencée une conduite 30 à vanne régulatrice 31 asservie à un pressostat 32, cette conduite 30 aboutissant à une ligne d'échange 33 de l'échangeur 15 pour être raccordée via la conduite 34 à l'entrée du compresseur de cycle 2. La conduite d'évacuation de résiduaire 28 est raccordée à une ligne d'échange 35 de l'échangeur 15 avant de déboucher à l'atmosphere.

Le fonctionnement est le suivant:

De l'argon impur comprenant 1 à 3 % d'azote et 1 à 3 % d'oxygène avec une quantité d'hydrogène excédentaire par rapport à la quantité stoéchiométrique pour réagir avec l'oxygène est introduit par la canalisation 3 et est amené à la pression moyenne (par exemple de 5 bars) par le compresseur 2 et de là au réacteur 5 où la totalité de l'oxygène réagit avec l'hydrogène pour se transformer en eau.

L'argon traité issue du réacteur 5 contenant les mêmes quantités d'argon et d'azote, dépourvu totalement d'oxygène, mais comprenant de l'eau et une légère quantité excédentaire d'hydrogène, par exemple 1%, est refroidi dans les échangeurs 6 et est débarrassé dans le séparateur 8 de l'eau qu'il contient. Les quantités résiduelles d'eau encore présentes dans l'argon traité sont finalement éliminées dans les dessicateurs 11 ou 12, de sorte que le mélange peut alors être refroidi, toujours sous la moyenne pression, dans l'échangeur 6 jusqu'à être complètement liquéfié dans le serpentin-échangeur 17, après quoi l'argon traité est détendu par la vanne 38 à une pression intermédiaire (1,9 bars [1,9 × 10⁵ Pa] par exemple) et est transféré dans le séparateur 22, où la fraction gazeuse contenant la totalité de l'hydrogène est transférée, via la vanne régulatrice 31, vers l'entrée du compresseur 2 après avoir été réchauffée dans l'échangeur 15.

La fraction liquide issue du séparateur 22, et qui est presque totalement débarassée de l'hydrogène, est alors transférée dans la colonne de déazotation où, de façon bien connue, l'argon se liquéfie en cuve avec une grande pureté et pute être soutiré par la canalisation 27, le résiduaire contenant l'azote à éliminer étant dirigé par la canalisation 28 vers l'échangeur 15 où il est réchauffé avant d'être rejeté à l'atmosphère.

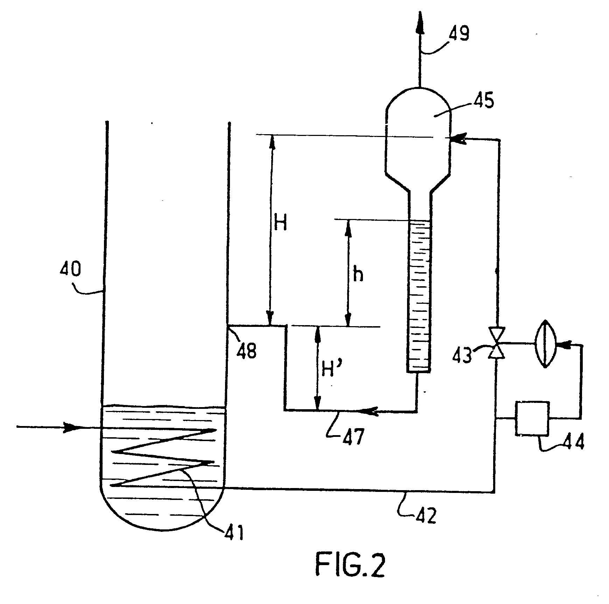

Selon la variante de réalisation de la figure 2, l'argon traité sous pression moyenne est toujours liquéfié en 41 par échange avec l'argon liquide pur en cuve de la colonne de déazotation 40 et est dirigé vers un séparateur 45 via la vanne de détente asservi à un dispositif régulateur 44. Le séparateur 45 présente un partie verticalement allongée vers le bas 46 qui est reliée directement à la colonne de déazotation 40 par une simple canalisation 47 aboutissant en un point d'introduction 48 à un niveau H' au-dessus du point le plus bas de la canalisation 47, tandis que la fraction gazeuse comprenant l'hydrogène est évacuée également par une simple canalisation 49, toutes les vannes à la pression de détente étant alors supprimées.

La pression du séparateur 45 est aux pertes de charge près du circuit, égale à la pression de l'argon brut à l'aspiration du compresseur; la hauteur h de la colonne de liquide dans la partie 46 du séparateur 45 correspond à la différence entre la pression de la colonne de distillation 40 et celle du séparateur 45; il faut donc définir une hauteur H d'introduction de l'argon traité détendu dans le séparateur 45 supérieure à cette différence en toutes circonstances et une hauteur H' également supérieure à cette différence (en valeur absolue) en toutes circonstances. La séparateur 45 est donc dimensionné de telle façon que sa partie supérieure assure la fonction de séparation gaz-liquide, le prolongement vers le bas présente une section suffisante pour que la vitesse d'écoulement descendante du liquide soit suffisamment faible pour éviter l'entraînement simultané de bulles gazeuses.

L'invention concerne l'obtention d'argon pur à partir d'argon brut issu d'une colonne de distillation d'air.

## Revendications

1. Procédé d'obtention d'argon substantiellement pur, à partir d'argon brut contenant à titre d'impuretés, 1 à 3 % d'oxygène et 1 à 3 % d'azote, selon lequel on assure, après compression à moyenne pression (en 2) dudit argon brut, l'élimination complète de l'oxygène par réaction catalytique (en 5) avec de l'hydrogène introduit en excès (en 3), la séparation de l'eau ainsi formée (en 8—9—11—12) et on soumet ensuite l'argon ainsi traité, comprenant l'impureté azote et ledit excès d'hydrogène, à une condensation et séparation des phases (17—22), renvoi (en 30—33) dan la chaîne de traitement de la fraction gazeuse riche en hydrogène, distillation dans une colonne (18) sous basse pression de la fraction liquide constituée d'argon contenant comme impureté essentiellement de l'azote (en 26), élimination (en 35) d'un résiduaire en tête de colonne de distillation (18), et recouvrement (en 27) d'une fraction liquide d'argon pur en cuve de colonne, ladite condensation de l'argon traité sous moyenne pression s'effectuant (en 17) par échange thermique avec l'argon liquide épuré substantiellement sous pression atmosphérique, caractérisé en ce que les condensation et séparation des phases s'effectuent en deux étapes, à savoir d'abord une condensation (17) dudit gaz taité en cuve de colonne de distillation (18), puis, après détente substantielle (38) pour former un mélange diphasique, une séparation de ladite fraction gazeuse riche en hydrogène (22) et de ladite fraction liquide destinée à être distillée.

2. Installation d'obtention d'argon substantiellement pur, pour la mise en oeuvre du procédé, selon la revendication 1, du genre présentant un chaîne de traitement comprenant successivement un compresseur (2), un réacteur de déoxygénation (5), un échangeur-refroidisseur (6), des moyens dessiccateurs (8—9—11—12), des moyens de refroidissement et de condensation (15) (17) et de séparation (22) (45) et une colonne de distillation (18) (40), caractérisée par l'agencement spatialement séparé d'un condenseur (17) en amont et d'un séparateur (22) en aval et l'insertion d'une vanne de détente (38) (43) située entre ledit séparateur (22) et ledit condenseur (17).

3. Installation d'obtention d'argon substantiellement pur, selon la revendication 2, caractérisée en ce que des vannes de régulation (23 et 31) sont placées sur des canalisations de sortie basse (26) en haute (30) du séparateur (22).

4. Installation d'obtention d'argon substantiellement pur, selon la revendication 2, caractérisée en ce que le séparateur (45) a une partie allongée verticalement vers la bas et est raccordée, à sa partie basse, directement (en 47) à la colonne de distillation (40).

## Claims

1. Process for the production of substantially pure argon from crude argon which contains as impurities 1 to 3% of oxygen and 1 to 3% of nitrogen, in which process the total elimination of the oxygen is effected after compression at moderate pressure (in 2) of the said crude argon by catalytic reaction (in 5) with an excess of hydrogen supplied thereto (in 3), separation of the water thus formed (in 8—9—11—12) being performed, and the thus processed argon containing the nitrogen impurity and the said excess of hydrogen, is then submitted to condensation and separation of the phases (17—22), return in (30—33) of the gaseous fraction rich in hydrogen to the processing line, distillation in a column (18) under low pressure of the liquid fraction , consisting of argon essentially containing nitrogen as an impurity (in 26), elimination (in 35) of a residue at the head of the distillation column (18), and recovery (in 27) of a liquid fraction of pure argon at the foot of the column, the said condensation of the argon processed under moderate pressure being performed (in 17) by heat exchange with the liquid argon substantially purified under atmospheric pressure, characterised in that the condensation and separation of the phases occur in two stages, the first being a condensation (17) of the said processed gas at the foot of the distillation column (18), and then after substantial expansion (38) to form a two-phase mixture, separation of the said gaseous fraction rich in hydrogen (22) from the said liquid fraction intended to be distilled.

2. Apparatus for the production of substantially pure argon, for carrying out the process according to Claim 1, of the kind having a processing line successively comprising a compressor (2), a deoxygenation reactor (5), an exchanger-cooler (6), desiccation means (8—9—11—12), cooling and condensing means (15) (17), separating means (22) (45) and a distillation column (18) (40), characterised by the spatially separate introduction of a condenser (17) in an upward flow position and of a separator (22) in a downwards flow position and the insertion of a release valve (38) (43) between the said separator (22) and the said condenser (17).

3. Apparatus for the production of substantially pure argon according to Claim 2, characterised in that control valves (23 and 31) are located in the low outlet line (26) and the high outlet line (30) from the separator (22).

4. Apparatus for the production of substantially pure argon according to Claim 2, characterised in that the separator (45) has a vertically downward elongated portion and is directly connected at its lowermost portion (at 47) to the distillation column (40).

## Patentansprüche

1. Verfahren zur Gewinnung von im wesentlichen reinem Argon aus Rohargon mit einem Gehalt von 1 bis 3 % Sauerstoff und 1 bis 3 % Stickstoff als Verunreinigungen, indem man nach Verdichtung dieses Rohargons bei mittlerem Druck (bei 2) eine vollständige Entfernung des Sauerstoffes durch katalytische Reaktion (bei 5) mit im Überschuß (bei 3) eingeführtem Wasserstoff und die Abtrennung des so gebildeten Wassers (bei 8—9—11—12) gewährleistet und dann das so behandelte Argon, welches die Verunreinigung Stickstoff und den besagten überschüssigen Wasserstoff enthält, einer Kondensation und Phasentrennung (17—22) unterzieht, in die Behandlungskette der an Wasserstoff reichen gasförmigen Fraktion (bei 30—33) zurückschickt, in einer Kolonne (18) unter niedrigem Druck die flüssige Fraktion, welche aus Argon, das als Verunreinigung im wesentlichen Stickstoff enthält, besteht, destilliert (bei 26), einen Rest am Kopfende der Destillationskolonne (18) entfernt (bei 35) und eine flüssige Fraktion von reinem Argon in der Kolonnenwanne gewinnt, wobei diese Kondensation des bei mittlerem Druck behandelten Argons (bei 17) durch Wärmeaustausch mit dem flüssigen, im wesentlichen bei Atmosphärendruck gereinigten Argon erfolgt, dadurch gekennzeichnet, daß die Kondensation und die Phasentrennung in zwei Etappen durchgeführt werden, nämlich zunächst eine Kondensation (17) dieses behandelten Gases in der Wanne der Destillationskolonne (18) und sodann, nach einer wesentlichen Entspannung (38) unter Bildung eines zweiphasigen Gemisches, eine Trennung der besagten an Wasserstoff reichen gasförmigen Fraktion (22) und der besagten für die Destillation bestimmten flüssigen Fraktion.

2. Vorrichtung zur Gewinnung von im wesentlichen reinem Argon zur Durchführung des Verfahrens nach Anspruch 1 mit einer Behandlungskette, die nacheinander einer Kompressor (2), einen Reaktor zur Sauerstoffentfernung (5), einen Austauscher-Kühler (6), Trocknungseinrichtungen (8—9—11—12), Einrichtungen zur Kühlung und zur Kondensation (15) (17) und zur Trennung (22) (45) und eine Destillationskolonne (18) (40) enthält, gekennzeichnet durch eine räumlich getrennte Anordnung eines Kondensors (17) aufstromwärts und einer Trenneinrichtung (22) abstromwärts und durch die Einfügung eines Druckminderventils (38) (43), das zwischen dieser Trenneinrichtung (22) und diesem Kondensor (17) angeordnet ist.

3. Vorrichtung zur Gewinnung von im wesentlichen reinem Argon nach Anspruch 2, dadurch gekennzeichnet, daß Steuerventile (23 und 31) an den Leitungen des unteren (26) und oberen (30) Ausgangs der Trenneinrichtung (22) angeordnet sind.

4. Vorrichtung zur Gewinnung von im wesentlichen reinem Argon nach Anspruch 2, dadurch gekennzeichnet, daß die Trenneinrichtung (45) ein nach unten vertikal verlängertes Teil hat und an seinem unteren Teil direkt (bei 47) an die Destillationskolonne (40) angeschlossen ist.

**0 017 538**

FIG.1

FIG.2